**Europäisches Patentamt**

**European Patent Office**

**Office européen des brevets**

(19)

(11) Veröffentlichungsnummer : **0 068 473**
**B1**

(12) # EUROPÄISCHE PATENTSCHRIFT

(45) Veröffentlichungstag der Patentschrift :
**30.10.85**

(21) Anmeldenummer : **82105668.6**

(22) Anmeldetag : **25.06.82**

(51) Int. Cl.⁴ : **B 65 D 88/06**, B 60 K 15/08,
F 17 C 1/00

(54) Druckfester Tank.

(30) Priorität : **01.07.81 DE 3125963**
**05.08.81 DE 3131040**

(43) Veröffentlichungstag der Anmeldung :
**05.01.83 Patentblatt 83/01**

(45) Bekanntmachung des Hinweises auf die Patenterteilung : **30.10.85 Patentblatt 85/44**

(84) Benannte Vertragsstaaten :
**AT BE CH DE FR GB IT LI LU NL SE**

(56) Entgegenhaltungen :
**CH-A- 566 246**
**DE-A- 3 026 116**
**DE-B- 1 171 592**
**FR-A- 533 806**
**FR-A- 2 481 773**
**FR-E- 66 782**

(73) Patentinhaber : **Gerhard KG**

**D-5241 Weitefeld/Sieg (DE)**

(72) Erfinder : **Gerhard, Helmut**
**Im Schlossteinchen 23**
**D-5241 Weitefeld (DE)**

(74) Vertreter : **Strehl, Peter, Dipl.-Ing. et al**
**Strehl, Schübel-Hopf, Schulz Patentanwälte Widen-**
**mayerstrasse 17 Postfach 22 03 45**
**D-8000 München 22 (DE)**

Jouve, 18, rue St-Denis, 75001 Paris, France

## Beschreibung

Die Erfindung bezieht sich auf einen druckfesten Tank, insbesondere für Flüssiggas, gemäß der im Oberbegriff des Patentanspruchs 1 angegebenen Gattung.

Ein derartiger Tank ist aus der französischen Patentschrift Nr. 1 006 949 bekannt. Einen ähnlichen druckfesten Tank zeigt ferner die niederländische Offenlegungsschrift Nr. 7 703 630. Beide bekannten Tanks bestehen aus zwei Schalen, die längs ihren Umfangskanten miteinander verschweißt und zusätzlich durch ein koaxiales Rohr miteinander verbunden sind. Das Rohr bildet jedoch nicht Teil des Tankvolumens, so daß ein entsprechender Teil des insgesamt von dem Tank beanspruchten Raumes nicht genutzt wird. Ferner sind bei den bekannten Tanks die Füll-, Entleerungs- und Meßeinrichtungen am äußeren Umfang des Tankmantels vorgesehen, so daß der in einem Kraftfahrzeug für die Unterbringung eines solchen Tanks vorzusehende Raum normalerweise erheblich größer sein muß als das Nutzvolumen des Tanks. Eine weitere Schwierigkeit besteht darin, daß die exponiert liegende Füll-, Entleerungs- und Meßeinrichtungen beim Einbau der Gefahr von Beschädigungen ausgesetzt sind.

Der Erfindung liegt die Aufgabe zugrunde, einen Tank zu schaffen, der bei hoher Druckfestigkeit eine möglichst gute Ausnutzung des jeweils zur Verfügung stehenden Raumes gestattet und sich daher insbesondere als Flüssiggastank als Kraftfahrzeug eignet, und der eine sichere Unterbringung der Tankarmaturen gestattet.

Gemäß der im Patentanspruch 1 gekennzeichneten erfindungsgemäßen Lösung dieser Aufgabe steht der Innenraum des eine Verformung des Tanks verhindernden Rohres mit dem übrigen Tankvolumen in Verbindung und bildet daher einen Teil des Nutzvolumens. Aufgrund dieser Tatsache kann das Rohr einen ausreichend großen Durchmesser haben, so daß grundsätzlich Platz zur Aufnahme der Tankarmaturen in dem Rohr geschaffen wird.

Vorteilhafte Weiterbildungen der Erfindung sind in den Unteransprüchen gekennzeichnet.

Bevorzugte Ausführungsbeispiele der Erfindung werden nachstehend anhand der Zeichnungen näher erläutert. In den Zeichnungen zeigt

Figur 1 einen Meridianschnitt durch einen aus zwei Böden gebildeten Tank, wobei die Böden etwa Hälften eines Rotationsellipsoids bilden, genauer: korbbogenförmig gestaltet sind ;

Figur 2 eine Draufsicht auf ein weiteres Ausführungsbeispiel eines Tanks, der aus zwei Zylinderschalen, vier Halbböden, von denen jeweils zwei miteinander die Hälften etwa eines Rotationsellipsoids bilden, sowie zwei Zugrohren aufgebaut ist ;

Figur 3 eine Stirnansicht eines Tanks nach Fig. 2 ; und

Figuren 4 und 5 Schnitte längs den Linien IV-IV bzw. V-V nach Fig. 3.

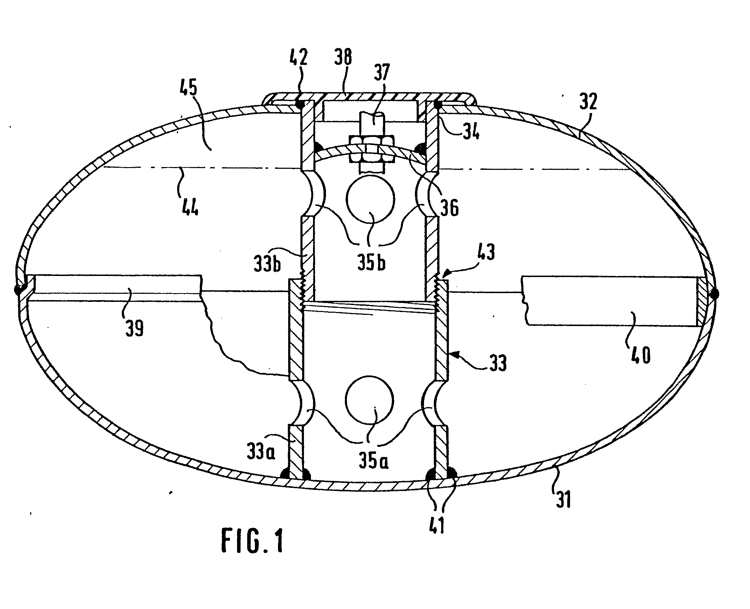

Der in Fig. 1 dargestellte Flüssiggastank ist aus zwei etwa klöpper- oder korbbogenförmig gewölbten Böden 31, 32 zusammengesetzt, die miteinander im wesentlichen die Form eines Rotationsellipsoids bilden und an ihren Umfangskanten in der Äquatorebene miteinander verschweißt sind. Die Außenmaße des so gebildeten Tanks entsprechen dem in Kraftfahrzeugen üblicherweise für ein Reserverad vorhandenen Raum.

Ein koaxial durch den Tank verlaufendes Rohr 33 verbindet die beiden Böden 31 und 32 als Zuganker gegen spärische Ausbeulung des Tanks unter Druck. Das Rohr 33 ist mit seinem einen Ende an der Innenwand des Bodens 31 angeschweißt, während es mit seinem anderen Ende eine im Boden 32 zentrisch angeordnete, in ihrem Durchmesser dem Außendurchmesser des Rohrs entsprechende Bohrung 34 durchsetzt, wobei der Rand der Bohrung 34 an der Außenwand des Rohrs 33 angeschweißt ist. In alternativer Ausführung kann das Rohr 33 an diesem Ende auch nach außen umgebördelt und an der Innenwand des Bodens 32 in dem die Bohrung 34 umgebenden Bereich angeschweißt sein.

Das Rohr 33 ist mit Durchbrüchen 35a, 35b versehen, so daß sein Innenraum mit dem übrigen Raum des Tanks in Verbindung steht und einen Teil des Tankvolumens bildet, wobei der Abschluß des freien Rohrendes durch einen gegenüber dem Profil des Bodens 32 nach innen versetzten, in das Rohr 33 eingeschweißten, nach außen konvex oder auch konkav gewölbten Deckel 36 gebildet wird. Die Durchbrüche 35b sind dabei so angeordnet, daß ihre obersten Kanten bei der in Fig. 1 gezeigten Einbau-Stellung des Tanks dessen maximale Füllhöhe 44 bestimmen, so daß der oberhalb dieser Höhe in dem Bereich außerhalb des Rohres 33 bestehende Raum als Ausdehnungskammer 45 verbleibt.

In dem Deckel 36 sind Tankarmaturen 37 (Füll-, Entleerungs- und Meßstutzen) angebracht, die in Fig. 1 schematisch gezeigt sind. Diese Armaturen befinden sich somit innerhalb des Außenprofils des Tanks und sind gegen Beschädigungen bestens geschützt. Eine Außenkappe 38 verdeckt den die Armaturen 37 enthaltenden Raum. In einer Variante können die Armaturen auch in der außerhalb des Deckels 36 liegenden Wand des Rohres 33 angebracht sein. Je nach dem Durchmesser des Rohres 33 kann auch der Deckel 36 als ganzer durch eine entsprechend gestaltete, die Armaturen aufweisende Ventilanordnung ersetzt sein.

Zum Verschweißen der Umfangskanten der beiden Böden 31 und 32 kann einer davon nach innen gebördelt sein, wie dies im linken Teil der Fig. 1 bei 39 dargestellt ist. In alternativer Ausführung kann auch in einen Boden ein über dessen Umfangskante hinausragender Ring eingeschweißt sein, der im rechten Teil der Fig. 1 mit 40 bezeichnet ist. Jede dieser Maßnahmen hat den Zweck, daß sich die beiden Böden 31 und 32 vor dem druckfesten Verschweißen ineinanderstecken lassen, so daß sie für den Schweißvorgang bereits lagemäßig zueinander fixiert sind.

Das Rohr 33 kann aus einem Stück bestehen. In diesem Fall wird es vor dem Verschweißen der beiden Böden 31 und 32 mit seinem einen Ende an der Innenwand des Bodens 31 bei 41 angeschweißt, während die Schweißnaht 42 zwischen der Innenkante der Bohrung 34 und dem anderen Ende des Rohres 33 nach dem Zusammensetzen der beiden Böden 31 und 32 angebracht wird.

In alternativer Ausführung kann das Rohr 33 aus zwei Abschnitten 33a, 33b bestehen, wobei das obere Ende des am Boden 31 befestigten Rohrabschnitts 33a mit einem Innengewinde und das untere Ende des im Durchmesser entsprechend kleineren, am Boden 32 befestigten Rohrabschnitts 33b mit einem Außengewinde versehen ist. In diesem Fall wird zunächst der Rohrabschnitt 33a am Boden 31 und der Rohrabschnitt 33b am Boden 32 angeschweißt. Sodann werden die beiden Rohrabschnitte an der in der Fig. 1 gezeigten Stelle 43 miteinander verschraubt, bis die Umfangskanten der beiden Böden 31 und 32 aufeinandertreffen, die anschließend ihrerseits miteinander verschweißt werden. Da die beiden Böden 31 und 32 in diesem Fall durch die beiden Abschnitte 33a und 33b des Rohres 33 relativ zueinander positioniert werden, können zusätzliche Maßnahmen wie die Bördelung 39 oder der Ring 40 entfallen und die beiden Kanten der Böden 31 und 32 anstelle der in Fig. 1 angenommenen überlappenden Verschweißung stumpf zusammengeschweißt werden. Die durch die Verschraubung erreichbare Vorspannung ergibt dabei eine besonders feste Verschweißung.

Anstelle zweier Rohrabschnitte 33a, 33b unterschiedlichen Durchmessers können auch solche gleichen Querschnitts verwendet und über eine äußere oder innere Muffe miteinander verschraubt werden.

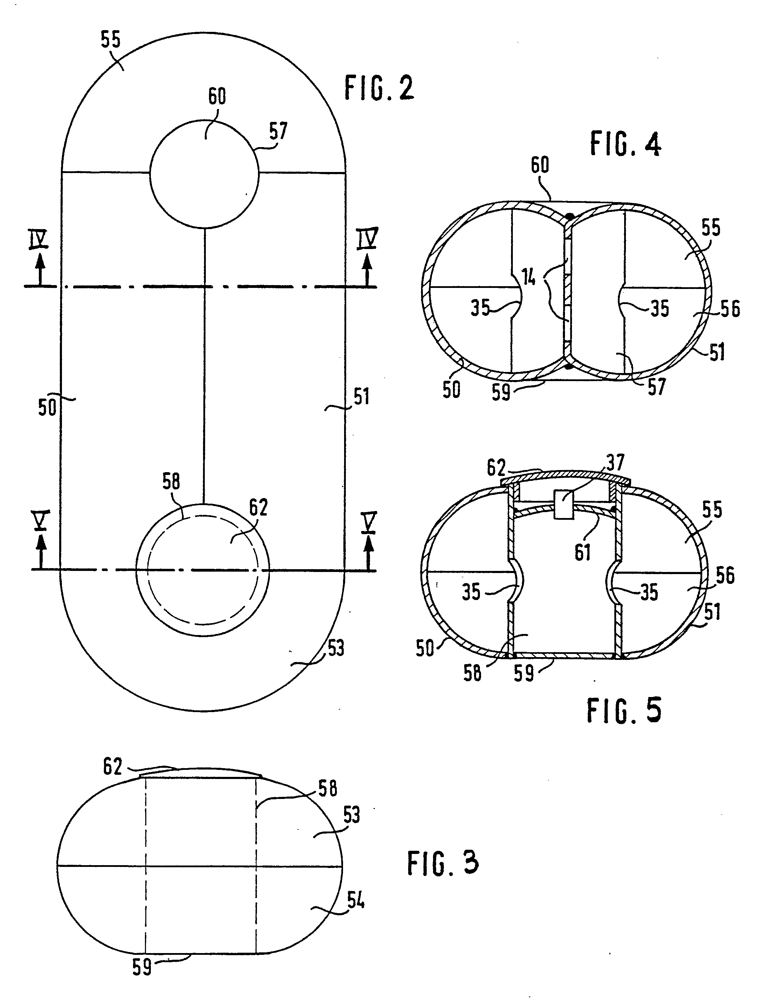

Die in Fig. 2 bis 5 gezeigte Version eines Flüssiggastanks besteht aus zwei zylindrischen Rohren oder Schalen 50, 51, die im Schnitt einander durchdringen. Dabei ist die Schale 51 als Vollzylinder ausgebildet, wobei ihr die innere Zugwand bildender Teil abgeflacht ist. Gemäß Fig. 4 ist diese Zugwand mit Durchbrüchen 14 versehen.

Stirnseitig sind die beiden Schalen 50 und 51 durch jeweils zwei Halbböden 53, 54 bzw. 55, 56 abgeschlossen sind. Die beiden Halbböden 53 und 55 sowie 54 und 56 bilden jeweils Hälften eines einstückig tiefgezogenen oder in sonstiger Weise verformten, beispielsweise korbbogenartig gewölbten Bodens.

An der Übergangsstelle zwischen den Schalen 50 und 51 und den von jeweils zwei Halbböden 53, 54 ; 55, 56 gebildeten Stirnwänden des Tanks ist jeweils ein den Tank vertikal durchsetzendes Rohr 57 bzw. 58 eingesetzt. Der Gesamtaufbau des Tanks nach Fig. 2 bis 5 entspricht daher bezüglich seiner Stirnwände dem Aufbau nach Fig. 7, wobei jedoch die Halbböden 53 bis 56 derart gekrümmt sind, daß sie dem Radius der zylindrischen Schalen 50 und 51 im Bereich außerhalb der Rohre 57 und 58 entsprechen.

Wie aus Fig. 4 und 5 hervorgeht, sind die Rohre 57 und 58 durchgehend eingesetzt und mit den Schalen 50 und 51 sowie den Halbböden 53 bis 56 verschweißt. Beide Rohre weisen Durchbrüche 14 auf, so daß ihr Innenraum mit dem übrigen Innenraum des Tanks in Verbindung steht. Die Unterseite der Rohre 57 und 58 ist durch eine eingeschweißte kreisrunde Scheibe 59 verschlossen. Eine ähnliche Scheibe 60 verschließt das Rohr 57 auch am oberen Ende, während das Rohr 58 ähnlich wie der obere Rohrabschnitt 33b in Fig. 7 mittels eines nach innen versetzten Deckels 61 abgeschlossen ist, der schematisch gezeigte Tankarmaturen 37 trägt. Eine Außenkappe 62 verdeckt den die Armaturen 37 enthaltenden Raum.

Die in Fig. 4 im Schnitt gezeigte innere Zugwand ist an ihren beiden Enden jeweils an die Außenwand der Rohre 57 und 58 angeschweißt. Dadurch wird ein Einreißen der Zugwand verhindert. Gleichzeitig wird die Steifigkeit und Druckfestigkeit des Tanks durch diese Maßnahme erhöht.

Anstelle der in Fig. 2 und 4 angenommenen Ausgestaltung, bei der die Zugwand einen Teil der vollzylindrischen Schale 51 bildet, ist es auch möglich, die Zugwand separat auszubilden und zwei teilzylindrische Schalen von beiden Seiten anzuschweißen, wobei die Zugwand dann nach oben und unten ein Stück über die teilzylindrischen Schalen herausragen und auch in diesem äußeren Bereich an die Rohre 57 und 58 angeschweißt sein kann.

**Patentansprüche**

1. Druckfester Tank, insbesondere für Flüssiggas, umfassend zwei gewölbte Böden (31, 32 ; 53 ... 56), die im wesentlichen die Form von Rotationsellipsoid-Hälften haben und an ihren aufeinander zu verlaufenden Umfangskanten miteinander sowie an den Enden eines koaxial verlaufenden Rohres (33 ; 58) verschweißt sind, dadurch gekennzeichnet, daß das Rohr (33 ; 58) im Tankinnern mit Durchbrüchen (35 ; 35a, 35b) versehen ist, an seinem einen Ende geschlossen ist und an seinem anderen Ende einen zu öffnenden Verschluß (36 ; 61) aufweist.

2. Tank nach Anspruch 1, dadurch gekennzeichnet, daß der Verschluß (36 ; 61) gegenüber dem Profil des anderen Bodens (32 ; 53) in dem Rohr (33 ; 58) nach innen versetzt und mit Tankarmaturen (37) versehen ist.

3. Tank nach Anspruch 1 oder 2, dadurch gekennzeichnet, daß das Rohr (33) aus zwei jeweils mit einem Boden (31, 32) verbundenen, miteinander verschraubbaren Abschnitten (33a, 33b) besteht.

4. Tank nach einem der Ansprüche 1 bis 3, dadurch gekennzeichnet, daß der in Einbaustellung des Tanks oberste Durchbruch (35b) in der Rohr (33) derart angeordnet ist, daß über der dadurch definierten maximalen Füllhöhe (44) in dem Raum außerhalb des Rohres (33) ein Ausdehnungsvolumen (45) verbleibt.

5. Tank nach Anspruch 1 oder 2, dadurch gekennzeichnet, daß die beiden Böden (53 ... 56) in einer die Rotationsachse enthaltenden Ebene zur Bildung zweier Stirnwände geteilt sind, daß zwischen den Stirnwänden zwei parallele zylindrische Schalen (50, 51) eingefügt sind, die im Querschnitt einander schneiden und eine zwischen den Schnittlinien verlaufende, mit Durchbrüchen (14) versehene Zugwand aufweisen, und daß im Anschlußbereich zwischen den Schalen (50, 51) und den Stirnwänden jeweils ein den Tank parallel zu der Rotationsachse durchsetzendes Rohr (57, 58) vorgesehen ist.

6. Tank nach Anspruch 5, dadurch gekennzeichnet, daß die Zugwand mit ihren beiden innerhalb des Tanks liegenden Stirnkanten an den Rohren (57, 58) angeschweißt ist.

## Claims

1. A pressure-proof tank, particularly for liquid gas, comprising two vaulted heads (31, 32 ; 53 ... 56) which are substantially formed as halves of an ellipsoid of revolution and which are welded together at their mutually facing peripheral edges and are welded to the ends of a coaxially extending tube (33 ; 58), characterised in that the tube (33 ; 58) is provided with openings (35 ; 35a, 35b) inside the tank, the tube being closed at its one end and having, at its other end, a closure (36 ; 61) adapted to be opened.

2. The tank of claim 1, characterised in that the closure (36 ; 61) is offset inwardly of the tube (33 ; 58) with respect to the profile of the other head (32 ; 53) and provided with tank fittings (37).

3. The tank of claim 1 or 2, characterised in that the tube (33) consists of two sections (33a, 33b) adapted to be screwed together, each section being connected with one of the heads (31, 32).

4. The tank of any of claims 1 to 3, characterised in that the uppermost opening (35b) in the tube (33), in the mounting condition of the tank, is disposed so that an expansion space (45) is retained in the area outside the tube (33) above the thus defined maximum filling level (44).

5. The tank of claim 1 or 2, characterised in that both heads (53 ... 56) are divided in a plane containing the axis of revolution to form two end walls, that two parallel cylindrical shells (50, 51) are inserted between the end walls, the shells intersecting each other in cross-section with a tension wall extending between the lines of intersection and provided with openings (14), and that tubes (57, 58) penetrating the tank parallel to the axis of revolution are each provided in the joining region between the shells (50, 51) and the end walls.

6. The tank of claim 5, characterised in that the tension wall has both its end edges disposed inside the tank welded to the tubes (57, 58).

## Revendications

1. Réservoir résistant à la pression, notamment pour gaz liquéfié, comprenant deux fonds bombés (31, 32 ; 53 ... 56) qui présentent sensiblement la forme de moitiés d'ellipsoïdes de révolution, et sont soudés sur leurs bords périphériques dirigés l'un vers l'autre ainsi qu'aux extrémités d'un tube traversant coaxial (33 ; 58), caractérisé en ce que le tube (33 ; 58) est muni à l'intérieur du réservoir de passages (35 ; 35a, 35b), est fermé à l'une de ses extrémités et présente à son autre extrémité une fermeture (36 ; 61) susceptible d'être ouverte.

2. Réservoir selon la revendication 2, caractérisé en ce que la fermeture (36 ; 61) est décalée vers l'intérieur dans le tube (33 ; 58) par rapport au profil de l'autre fond (32 ; 53) et est munie de la robinetterie (37).

3. Réservoir selon la revendication 1 ou 2, caractérisé en ce que le tube (33) est constitué par deux sections (33a, 33b) reliées chacune à un fond (31, 32) et pouvant être vissées l'une à l'autre.

4. Réservoir selon l'une quelconque des revendications 1 à 3, caractérisé en ce que le passage supérieur (35b) est constitué dans le tube (33), dans la position de montage du réservoir, de manière que subsiste un volume d'expansion (45) dans l'espace situé à l'extérieur du tube (33), au-dessus de la hauteur maximale de remplissage (44) ainsi définie.

5. Réservoir selon la revendication 1 ou 2, caractérisé en ce que les deux fonds (53 ... 56) sont subdivisés dans un plan contenant l'axe de rotation pour former deux parois latérales, en ce qu'entre les deux parois latérales sont insérées deux coquilles cylindriques et parallèles (50, 51), qui s'intersectent mutuellement en coupe transversale et présentent une paroi de traction disposée entre les lignes d'intersection et munie de passages (14), et en ce qu'un tube (57, 58) traversant le réservoir parallèlement à l'axe de rotation est prévu chaque fois dans la région de raccordement entre les coquilles (50, 51) et les parois frontales.

6. Réservoir selon la revendication 5, caractérisé en ce que la paroi de traction est soudée aux tubes (57, 58) par ses deux bords frontaux situés à l'intérieur du réservoir.

FIG.1

0 068 473

FIG. 2

FIG. 4

FIG. 5

FIG. 3

2